# EUROPEAN PATENT APPLICATION

(11) **EP 4 524 382 A1**
(43) Date of publication of application: **19.03.2025**
(21) Application number: 24200120.4
(22) Date of filing: 12.09.2024
(51) Int. Cl.: F02C 3/22, B64D 37/02, F02C 7/22, F17C 13/12

(54) **VENTED HYDROGEN FUEL RESERVOIR FOR AIRCRAFT ENGINE**

(30) Priority: 12.09.2023 US 202318367288
(71) Applicant: PRATT & WHITNEY CANADA CORP., Longueuil, Québec J4G 1A1 (CA)
(72) Inventor: OZOG, Mateusz, (01BE5) Longueuil, J4G 1A1 (CA); FARAH, Assaf, (01BE5) Longueuil, J4G 1A1 (CA)
(74) Representative: Dehns

(57) **Abstract**

An assembly is provided for an aircraft. This aircraft assembly includes a hydrogen containment vessel (70), a hydrogen storage vessel (68), a hydrogen supply channel, a cavity purge channel (106) and a plenum purge channel (86). The hydrogen containment vessel (70) includes a containment vessel wall (76). The hydrogen storage vessel (68) includes a storage vessel wall (72) and a storage cavity (74). The hydrogen storage vessel (68) is disposed within the hydrogen containment vessel (70). A containment plenum (82) is disposed between the storage vessel wall (72) and the containment vessel wall (76). The hydrogen supply channel is fluidly coupled with the storage cavity (74). The cavity purge channel (106) is fluidly coupled with the storage cavity (74). The plenum purge channel (86) is fluidly coupled with the containment plenum (82).

## Description

### TECHNICAL FIELD

This disclosure relates generally to an aircraft and, more particularly, to a fuel delivery system for an aircraft engine.

### BACKGROUND INFORMATION

As government emissions standards tighten, interest in alternative fuels for gas turbine engines continues to grow. There is interest, for example, in fueling a gas turbine engine with hydrogen fuel rather than a traditional hydrocarbon fuel such as kerosine to reduce greenhouse emissions. Various systems and methods are known in the art for fueling a gas turbine engine with hydrogen fuel. While these known systems and methods have various advantages, there is still room in the art for improvement.

### SUMMARY

According to an aspect of the present disclosure, an assembly is provided for an aircraft. This aircraft assembly includes a hydrogen containment vessel, a hydrogen storage vessel, a hydrogen supply channel, a cavity purge channel and a plenum purge channel. The hydrogen containment vessel includes a containment vessel wall. The hydrogen storage vessel includes a storage vessel wall and a storage cavity. The hydrogen storage vessel is disposed within the hydrogen containment vessel. A containment plenum is disposed between the storage vessel wall and the containment vessel wall. The hydrogen supply channel is fluidly coupled with the storage cavity. The cavity purge channel is fluidly coupled with the storage cavity. The plenum purge channel is fluidly coupled with the containment plenum.

According to another aspect of the present disclosure, another assembly is provided for an aircraft. This aircraft assembly includes a hydrogen containment vessel, a hydrogen storage vessel, a hydrogen supply circuit, a plenum purge circuit and a flushing circuit. The hydrogen containment vessel includes a containment vessel wall. The hydrogen storage vessel includes a storage vessel wall and a storage cavity. The hydrogen storage vessel is disposed within the hydrogen containment vessel. A containment plenum extends between the storage vessel wall and the containment vessel wall. The hydrogen supply circuit is fluidly coupled with the storage cavity. The plenum purge circuit is fluidly coupled with the containment plenum. The flushing circuit is fluidly coupled with the containment plenum. The flushing circuit is configured to direct fluid into the containment plenum to flush out hydrogen fuel, which has leaked from the hydrogen storage vessel into the containment plenum, through the plenum purge circuit.

According to still another aspect of the present disclosure, a method of operation is provided. This operating method includes: supplying hydrogen fuel to a fuel injector of an aircraft engine from a storage vessel; purging leaked hydrogen fuel from a containment plenum surrounding the storage vessel to ambient; and purging stored hydrogen fuel from an internal storage cavity of the storage vessel to ambient when a parameter of the leaked hydrogen fuel is above a threshold.

The operating method also includes directing air into the containment plenum to flush the leaked hydrogen fuel out of the containment plenum.

The air may be directed into the containment plenum using an electric fan.

The aircraft assembly may also include a cavity purge circuit fluidly coupled with the storage cavity. The cavity purge circuit may be configured to selectively purge the hydrogen fuel out of the hydrogen storage vessel.

The aircraft assembly may also include an aircraft engine, which aircraft engine may include a fuel injector. The fuel injector may be fluidly coupled with the storage cavity through the hydrogen supply channel.

The hydrogen supply channel may project through the containment vessel wall.

The cavity purge channel may project through the containment vessel wall.

The aircraft assembly may also include a cavity purge circuit configured to selectively fluidly couple the storage cavity to an external environment. The cavity purge circuit may include the cavity purge channel.

The cavity purge circuit may also include a cavity purge valve fluidly coupled to the storage cavity by the cavity purge channel.

The aircraft assembly may also include a plenum purge circuit configured to selectively fluidly couple the containment plenum to an external environment. The plenum purge circuit may include the plenum purge channel.

The plenum purge circuit may also include a plenum purge valve fluidly coupled to the containment plenum by the plenum purge channel.

The aircraft assembly may also include a plenum purge circuit and a cavity purge circuit. The plenum purge circuit may be configured to purge leaked hydrogen fuel from the containment plenum. The plenum purge circuit may include the plenum purge channel. The cavity purge circuit may be configured to purge stored hydrogen fuel from the storage cavity when a parameter of the leaked hydrogen fuel is greater than a threshold, the cavity purge circuit comprising the cavity purge channel.

The aircraft assembly may also include a flushing circuit fluidly coupled with the containment plenum. The flushing circuit may be configured to direct air into the containment plenum to flush out leaked hydrogen fuel through the plenum purge channel.

The flushing circuit may include an air pump.

The flushing circuit may include a valve.

The aircraft assembly may also include an air source selectively fluidly coupled to the containment plenum through the flushing circuit.

The air source may be an external environment.

The aircraft assembly may also include an aircraft engine, which aircraft engine may include a fuel injector and a flowpath. The fuel injector may be fluidly coupled with the storage cavity through the hydrogen supply channel. The air source may be or otherwise include a bleed from the flowpath.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of an aircraft system.
FIG. 2 is a partial schematic illustration of the aircraft system with a gas turbine engine.
FIG. 3 is a schematic illustration of a combustor section of the gas turbine engine with a fuel delivery system.
FIG. 4 is a partial schematic illustration of the fuel delivery system servicing the gas turbine engine, where the fuel delivery system includes a vented hydrogen fuel reservoir.

### DETAILED DESCRIPTION

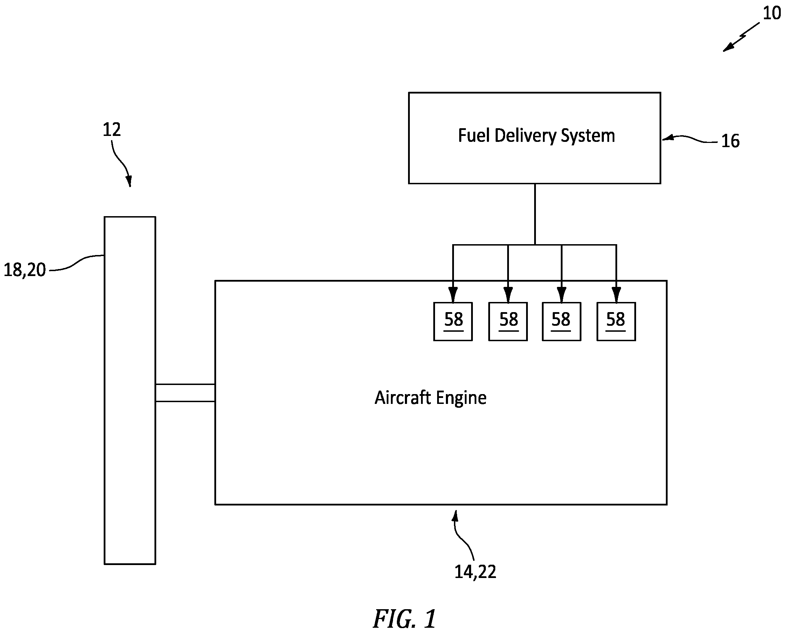

FIG. 1 illustrates a system 10 for an aircraft. The aircraft may be an airplane, a helicopter, a drone (e.g., an unmanned aerial vehicle (UAV)) or any other manned or unmanned aerial vehicle or system. The aircraft system 10 may be configured as, or otherwise included as part of, a propulsion system for the aircraft. The aircraft system 10 may also or alternatively be configured as, or otherwise included as part of, an electrical power system for the aircraft. The aircraft system 10 of FIG. 1 includes a mechanical load 12 and an aircraft engine 14 configured to power operation of the mechanical load 12. The aircraft system 10 also include a fuel delivery system 16 for the aircraft engine 14.

The mechanical load 12 may be configured as or otherwise include a rotor 18 mechanically driven and/or otherwise powered by the aircraft engine 14. This driven rotor 18 may be a bladed propulsor rotor 20 (e.g., an air mover) where the aircraft system 10 is (or is part of) the aircraft propulsion system. The propulsor rotor 20 includes a plurality of rotor blades arranged circumferentially around and connected to at least (or only) one rotor base (e.g., a disk or a hub). The propulsor rotor 20 may be an open (e.g., un-ducted) propulsor rotor or a ducted propulsor rotor. Examples of the open propulsor rotor include a propeller rotor for a turboprop propulsion system, a rotorcraft rotor (e.g., a main helicopter rotor) for a turboshaft propulsion system, a propfan rotor for a propfan propulsion system, and a pusher fan rotor for a pusher fan propulsion system. An example of the ducted propulsor rotor is a fan rotor for a turbofan propulsion system. The present disclosure, however, is not limited to the foregoing exemplary propulsor rotor arrangements. Moreover, the driven rotor 18 may alternatively be a generator rotor of an electric power generator where the aircraft system 10 is (or is part of) the aircraft power system; e.g., an auxiliary power unit (APU) for the aircraft.

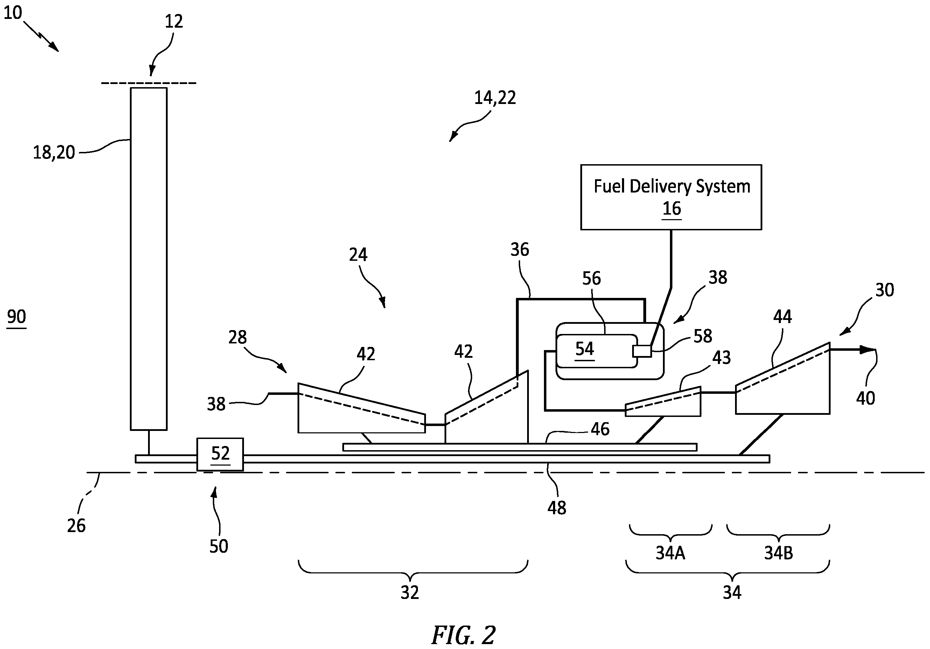

The aircraft engine 14 is configured as an internal combustion (IC) engine. The aircraft engine 14 of FIG. 2, for example, is configured as a gas turbine engine 22. The present disclosure, however, is not limited to such an exemplary aircraft engine configuration. The aircraft engine 14, for example, may alternatively be configured as or otherwise include a rotary engine (e.g., a Wankel cycle engine), a reciprocating piston engine (e.g., an inline (I) engine, a V-engine or a W-engine), or the like.

A core 24 of the gas turbine engine 22 of FIG. 2 extends axially along an axis 26 between an upstream, forward end of the engine core 24 and a downstream, aft end of the engine core 24. This axis 26 may be a centerline axis of the gas turbine engine 22 and/or its engine core 24. The axis 26 may also or alternatively be a rotational axis of one or more rotating assemblies (e.g., 28 and 30) of the gas turbine engine 22 and its engine core 24. The engine core 24 of FIG. 2 includes a compressor section 32, a combustor section 33, a turbine section 34 and a core flowpath 36. The turbine section 34 of FIG. 2 includes a high pressure turbine (HPT) section 34A and a low pressure turbine (LPT) section 34B; e.g., a power turbine (PT) section. The core flowpath 36 extends sequentially through the compressor section 32, the combustor section 33, the HPT section 34A and the LPT section 34B from an airflow inlet 38 into the core flowpath 36 to a combustion products exhaust 40 from the core flowpath 36. The core inlet 38 may be disposed at (e.g., on, adjacent or proximate) the forward end of the engine core 24, and the core exhaust 40 may be disposed at the aft end of the engine core 24.

Each of the engine sections 32, 34A and 34B includes one or more respective bladed rotors 42-44. Each of these engine rotors 42-44 includes a plurality of rotor blades (e.g., airfoils, vanes, etc.) arranged circumferentially around and connected to at least (or only) one rotor base (e.g., a disk, a hub, etc.). The rotor blades, for example, may be formed integral with or mechanically fastened, welded, brazed and/or otherwise attached to the respective rotor base(s).

The compressor rotors 42 are coupled to and rotatable with the HPT rotor 43. The compressor rotors 42 of FIG. 2, for example, are connected to the HPT rotor 43 by a high speed shaft 46. At least (or only) the compressor rotors 42, the HPT rotor 43 and the high speed shaft 46 collectively form the high speed rotating assembly 28; e.g., a high speed spool. The LPT rotor 44 is connected to a low speed shaft 48. At least (or only) the LPT rotor 44 and the low speed shaft 48 collectively form the low speed rotating assembly 30. This low speed rotating assembly 30 is further coupled to the driven rotor 18 (e.g., the propulsor rotor 20) through a drivetrain 50. The drivetrain 50 may be configured as a geared drivetrain, where a geartrain 52 (e.g., a transmission, a speed change device, an epicyclic geartrain, etc.) is disposed between and operatively couples the driven rotor 18 to the low speed rotating assembly 30 and its LPT rotor 44. With this arrangement, the driven rotor 18 may rotate at a different (e.g., slower) rotational velocity than the low speed rotating assembly 30 and its LPT rotor 44. However, the drivetrain 50 may alternatively be configured as a direct drive drivetrain, where the geartrain 52 is omitted. With this arrangement, the driven rotor 18 rotates at a common (the same) rotational velocity as the low speed rotating assembly 30 and its LPT rotor 44. Referring again to FIG. 2, each of the rotating assemblies 28 and 30 and its members may be rotatable about the axis 26.

During operation of the gas turbine engine 22, air may be directed across the driven rotor 18 (e.g., the propulsor rotor 20) and into the engine core 24 through the core inlet 38. This air entering the core flowpath 36 may be referred to as core air. The core air is compressed by the compressor rotors 42 and directed into a combustion chamber 54 (e.g., an annular combustion chamber) within a combustor 56 (e.g., an annular combustor) of the combustor section 33. Fuel is injected into the combustion chamber 54 by one or more fuel injectors 58 and mixed with the compressed core air to provide a fuel-air mixture. This fuel-air mixture is ignited and combustion products thereof flow through and sequentially cause the HPT rotor 43 and the LPT rotor 44 to rotate. The rotation of the HPT rotor 43 drives rotation of the compressor rotors 42 and, thus, the compression of the air received from the core inlet 38. The rotation of the LPT rotor 44 drives rotation of the driven rotor 18. Where the driven rotor 18 is configured as the propulsor rotor 20, the rotation of that propulsor rotor 20 may propel additional air (e.g., outside air, bypass air, etc.) outside of the engine core 24 to provide aircraft thrust and/or lift. Where the driven rotor 18 is configured as the generator rotor, the rotation of that generator rotor may facilitate generation of electricity.

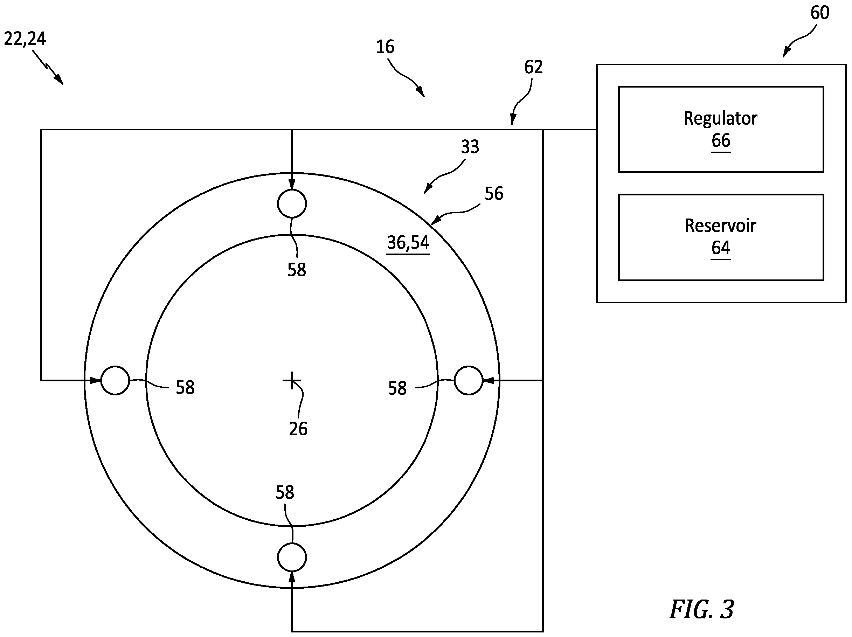

Referring to FIG. 3, the fuel delivery system 16 is configured to deliver the fuel to the combustor section 33 and its combustor 56 for combustion. The fuel delivery system 16 of FIG. 3, for example, includes a fuel source 60, a fuel supply circuit 62 and the one or more fuel injectors 58. The fuel source 60 of FIG. 3 includes a fuel reservoir 64 and a fuel flow regulator 66; e.g., a valve and/or a pump. The fuel reservoir 64 is configured to store the fuel before, during and/or after turbine engine operation. The fuel flow regulator 66 is configured to direct and/or meter a flow of the fuel from the fuel reservoir 64 to the fuel injectors 58 through the fuel supply circuit 62. The fuel injectors 58 may be arranged circumferentially about the axis 26 in an array. Each fuel injector 58 is configured to direct the fuel received from the fuel source 60 into the combustion chamber 54 for mixing with the compressed core air to provide the fuel-air mixture.

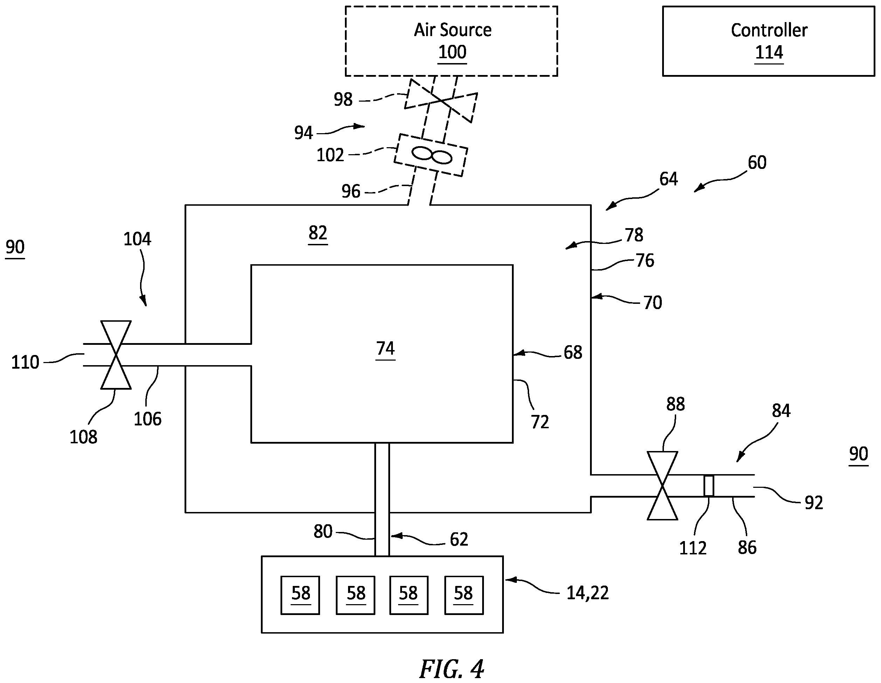

The aircraft engine 14 of the present disclosure is configured as a non-hydrocarbon engine / a hydrocarbon free engine. The aircraft engine 14, more particularly, is configured as a hydrogen fueled engine. The fuel injected into the combustion chamber 54 by the fuel injectors 58 is (or substantially includes) hydrogen (H₂) fuel; e.g., H₂ gas. Hydrogen fuel, however, is readily flammable / combustible when in the presence of oxygen and an ignition source; e.g., a flame, a spark, a relatively hot object, etc. Special care therefore is provided for storing the hydrogen fuel onboard the aircraft. The fuel reservoir 64 of FIG. 4, for example, is a vented double walled hydrogen fuel reservoir. More particularly, the fuel reservoir 64 of FIG. 4 includes a hydrogen storage vessel 68 and a hydrogen containment vessel 70.

The hydrogen storage vessel 68 may form a primary fuel storage container for the aircraft engine 14 onboard the aircraft. The hydrogen storage vessel 68 may be configured as a tank, a cylinder, a pressure vessel, a bladder or any other type of fuel storage container. The hydrogen storage vessel 68 of FIG. 4, for example, has a storage vessel wall 72 (e.g., a sidewall) which forms an outer peripheral boundary of an enclosed hydrogen storage cavity 74 internal to the hydrogen storage vessel 68. The hydrogen storage vessel 68 and its storage vessel wall 72 may be constructed from metal, a fiber-reinforced composite material or another suitable material.

The hydrogen containment vessel 70 may form a fuel containment boundary for (e.g., an outer shell around) the hydrogen storage vessel 68. The hydrogen containment vessel 70 may be configured as a tank, a cylinder, a pressure vessel, a bladder or any other type of fuel containment container. The hydrogen containment vessel 70 of FIG. 4, for example, has a containment vessel wall 76 (e.g., a sidewall) which forms an outer peripheral boundary of an enclosed hydrogen containment cavity 78 internal to the hydrogen containment vessel 70. The hydrogen containment vessel 70 and its containment vessel wall 76 may be constructed from metal, a fiber-reinforced composite material or another suitable material. The material forming the hydrogen containment vessel 70 and its containment vessel wall 76 may be the same or different than the material forming the hydrogen storage vessel 68 and its storage vessel wall 72. The containment vessel wall 76, however, may have a reduced pressure capability and/or strength compared to the storage vessel wall 72 since the hydrogen containment vessel 70 is provided to contain hydrogen fuel leaked out from the hydrogen storage vessel 68 whereas the hydrogen storage vessel 68 is provided to hold a bulk of the hydrogen fuel. The containment vessel wall 76, for example, may have a thickness that is less than (e.g., up to five times (5x) less than) a thickness of the storage vessel wall 72. The present disclosure, however, is not limited to such an arrangement. It is contemplated, for example, the hydrogen storage vessel 68 and the hydrogen containment vessel 70 may alternatively have similar or the same structural properties.

The hydrogen storage vessel 68 of FIG. 4 is disposed within the hydrogen containment vessel 70 and its hydrogen containment cavity 78. The fuel supply circuit 62 (a hydrogen supply circuit) fluidly couples the hydrogen storage cavity 74 to the fuel injectors 58 across the containment vessel wall 76. The fuel supply circuit 62 of FIG. 4, for example, includes a fuel supply channel 80 (a hydrogen supply channel) which projects out from the storage cavity 74 and through the containment vessel wall 76.

The storage vessel wall 72 of FIG. 4 is spaced inward from the containment vessel wall 76. With this arrangement, the fuel reservoir 64 has a containment plenum 82 about (e.g., substantially or completely surrounding) the hydrogen storage vessel 68 and between the storage vessel wall 72 and the containment vessel wall 76. Here, the storage vessel wall 72 forms an inner peripheral boundary of the containment plenum 82. The containment vessel wall 76 forms an outer peripheral boundary of the containment plenum 82. The hydrogen containment vessel 70 and its containment vessel wall 76 may thereby contain (e.g., any) hydrogen fuel, which may leak out from the hydrogen storage vessel 68 (and/or fittings connected to the hydrogen storage vessel 68) during fuel delivery system operation, within the containment plenum 82.

The leaked hydrogen fuel may be purged / vented from the hydrogen containment vessel 70 and the containment plenum 82 using a plenum purge circuit 84. The plenum purge circuit 84 of FIG. 4 includes a plenum purge channel 86 and a plenum purge valve 88 which is fluidly coupled to the containment plenum 82 along the plenum purge channel 86. This plenum purge circuit 84 is configured to selectively fluidly couple the containment plenum 82 to an environment 90 external to the fuel delivery system 16 and, for example, external to the aircraft. The plenum purge circuit 84 of FIG. 4 and its plenum purge channel 86 project out from the hydrogen containment vessel 70 and its containment vessel wall 76 to an outlet 92 to ambient. The plenum purge circuit 84 may thereby discharge the leaked hydrogen fuel relatively far away from potential sources of ignition. However, when there is relatively little or no leaked hydrogen fuel, the plenum purge valve 88 may close to fluidly decouple the containment plenum 82 from the outlet 92 / the external environment 90.

To further facilitate purging the leaked hydrogen fuel from the containment plenum 82, the fuel reservoir 64 may be configured with an optional plenum flushing circuit 94. The flushing circuit 94 of FIG. 4 includes a flushing channel 96 and a flushing valve 98 which is fluidly coupled to the containment plenum 82 along the flushing channel 96. This flushing circuit 94 is configured to selectively fluidly couple the containment plenum 82 to a flushing fluid source such as an air source 100. This air source 100 may be configured as the external environment 90. The flushing circuit 94, for example, may include an air pump 102 (e.g., an electric fan / blower) which directs ambient air from the external environment 90, through the flushing channel 96, into the containment plenum 82. Alternatively, the air source 100 may be configured as a bleed from a flowpath of the aircraft engine 14; e.g., a core flowpath bleed, a bypass flowpath bleed, etc. With the foregoing arrangement, forced air is directed into the containment plenum 82 to flush out the leaked hydrogen fuel from the containment plenum 82 through the plenum purge circuit 84. In addition to flushing out the leaked hydrogen fuel, the air directed into the containment plenum 82 may also dilute the leaked hydrogen fuel. However, when there is relatively little or no leaked hydrogen fuel, the flushing valve 98 may close to fluidly decouple the air source 100 from the containment plenum 82.

Under certain conditions, a quantity of the hydrogen fuel leaked from the hydrogen storage vessel 68 into the containment plenum 82 may be relatively small. Under such conditions, the plenum purge circuit 84 may adequately purge the leaked hydrogen fuel and facilitate safe continued operation of the fuel delivery system 16. Under other conditions, however, the quantity of the hydrogen fuel leaked from the hydrogen storage vessel 68 into the containment plenum 82 may be relatively large. A cavity purge circuit 104 may thereby be provided to facilitate purging the storage cavity 74 of some or all of its stored hydrogen fuel. The cavity purge circuit 104 of FIG. 4 includes a cavity purge channel 106 and a cavity purge valve 108 which is fluidly coupled to the storage cavity 74 along the cavity purge channel 106. This cavity purge circuit 104 is configured to selectively fluidly couple the storage cavity 74 to the external environment 90. The cavity purge circuit 104 of FIG. 4 and its cavity purge channel 106 project out from the hydrogen containment vessel 70 and its storage vessel wall 72, through the containment vessel wall 76, to an outlet 110 to ambient. The cavity purge circuit 104 may thereby discharge the stored hydrogen fuel relatively far away from potential sources of ignition as well as prevent overloading the hydrogen containment vessel 70 and/or the plenum purge circuit 84. However, when there is relatively little or no leaked hydrogen fuel, the cavity purge valve 108 may close to fluidly decouple the storage cavity 74 from the outlet 110/ the external environment 90.

In some embodiments, a sensor 112 may be provided to measure a parameter of the leaked hydrogen fuel. The sensor 112 of FIG. 4, for example, is a flow sensor which measures fluid flow out of the containment plenum 82. When the measured fluid flow is below a threshold, a controller 114 controlling operation of the elements (e.g., 88, 98, 102 and 108) may determine the quantity of the leaked hydrogen fuel is relatively low and may signal the cavity purge valve 108 to close or remain closed. However, when the measured fluid flow is above the threshold, the controller 114 controlling operation of the elements (e.g., 88, 98, 102 and 108) may determine the quantity of the leaked hydrogen fuel is relatively high and may signal the cavity purge valve 108 to open.

In some embodiments, the plenum purge circuit 84 and its plenum purge channel 86 may be fluidly coupled to the containment plenum 82 at or about a gravitational bottom (e.g., lowest point) of the hydrogen containment vessel 70. With this arrangement, the plenum purge circuit 84 may also be used to purge / drain water (e.g., condensation) from the containment plenum 82. In other embodiments, the plenum purge circuit 84 and its plenum purge channel 86 may be fluidly coupled to the containment plenum 82 at or about a gravitational top (e.g., highest point) of the hydrogen containment vessel 70; e.g., where there is a separate water drain for the containment plenum 82. With this arrangement, an inlet to the plenum purge circuit 84 may be located closer to a bulk mass of the leaked hydrogen fuel, if any, within the containment plenum 82 since the leaked hydrogen fuel (e.g., hydrogen gas) is less dense / lighter than air.

In some embodiments, the plenum purge circuit 84 and its plenum purge valve 88 may be selectively opened and closed based on presence, if any, of the leaked hydrogen fuel within the containment plenum 82. In other embodiments, the plenum purge circuit 84 and its plenum purge valve 88 (if still included) may (e.g., always) be open during normal operation to continually purge / vent the leaked hydrogen fuel, if any, from the containment plenum 82.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft, comprising:
a hydrogen containment vessel (70) comprising a containment vessel wall (76);
a hydrogen storage vessel (68) including a storage vessel wall (72) and a storage cavity (74), the hydrogen storage vessel (68) disposed within the hydrogen containment vessel (70), and a containment plenum (82) disposed between the storage vessel wall (72) and the containment vessel wall (76);
a hydrogen supply channel (80) fluidly coupled with the storage cavity (74);
a cavity purge channel (106) fluidly coupled with the storage cavity (74); and
a plenum purge channel (86) fluidly coupled with the containment plenum (82).

2. The assembly of claim 1, further comprising:
an aircraft engine (14) comprising a fuel injector (58);
the fuel injector (58) fluidly coupled with the storage cavity (74) through the hydrogen supply channel (80).

3. The assembly of claim 1 or 2, wherein the hydrogen supply channel (80) projects through the containment vessel wall (76).

4. The assembly of any of claims 1 to 3, wherein the cavity purge channel (106) projects through the containment vessel wall (76).

5. The assembly of any preceding claim, further comprising:
a cavity purge circuit (104) configured to selectively fluidly couple the storage cavity (74) to an external environment (90);
the cavity purge circuit (104) comprising the cavity purge channel (106).

6. The assembly of claim 5, wherein the cavity purge circuit (104) further comprises a cavity purge valve (108) fluidly coupled to the storage cavity (74) by the cavity purge channel (106).

7. The assembly of any preceding claim, further comprising:
a plenum purge circuit (84) configured to selectively fluidly couple the containment plenum (82) to an external environment (90);
the plenum purge circuit (84) comprising the plenum purge channel (86).

8. The assembly of claim 7, wherein the plenum purge circuit (84) further comprises a plenum purge valve (88) fluidly coupled to the containment plenum (82) by the plenum purge channel (86).

9. The assembly of any preceding claim, further comprising:
a plenum purge circuit (84) configured to purge leaked hydrogen fuel from the containment plenum (82), the plenum purge circuit (84) comprising the plenum purge channel (86); and
a cavity purge circuit (104) configured to purge stored hydrogen fuel from the storage cavity (74) when a parameter of the leaked hydrogen fuel is greater than a threshold, the cavity purge circuit (104) comprising the cavity purge channel (106).

10. The assembly of any preceding claim, further comprising:
a flushing circuit (94) fluidly coupled with the containment plenum (82);
the flushing circuit (94) configured to direct air into the containment plenum (82) to flush out leaked hydrogen fuel through the plenum purge channel (86), optionally wherein the flushing circuit (94) comprises:
an air pump (102); and/or
a valve (98).

11. The assembly of claim 10, further comprising an air source (100) selectively fluidly coupled to the containment plenum (82) through the flushing circuit (94), optionally wherein:
the air source (100) comprises an external environment (90); or
the assembly further comprises an aircraft engine (14) comprising a fuel injector (58) and a flowpath (36), the fuel injector (58) fluidly coupled with the storage cavity (74) through the hydrogen supply channel (80), and the air source (100) comprising a bleed from the flowpath.

12. An assembly for an aircraft, comprising:
a hydrogen containment vessel (70) comprising a containment vessel wall (76);
a hydrogen storage vessel (68) including a storage vessel wall (72) and a storage cavity (74), the hydrogen storage vessel (68) disposed within the hydrogen containment vessel (70), and a containment plenum (82) extending between the storage vessel wall (72) and the containment vessel wall (76);
a hydrogen supply circuit (62) fluidly coupled with the storage cavity (74);
a plenum purge circuit (84) fluidly coupled with the containment plenum (82); and
a flushing circuit (94) fluidly coupled with the containment plenum (82), the flushing circuit (94) configured to direct fluid into the containment plenum (82) to flush out hydrogen fuel, which has leaked from the hydrogen storage vessel (68) into the containment plenum (82), through the plenum purge circuit (84).

13. The assembly of claim 12, further comprising:
a cavity purge circuit (104) fluidly coupled with the storage cavity (74);
the cavity purge circuit (104) configured to selectively purge the hydrogen fuel out of the hydrogen storage vessel (68).

14. A method of operation, comprising:
supplying hydrogen fuel to a fuel injector (58) of an aircraft engine (14) from a storage vessel (68);
purging leaked hydrogen fuel from a containment plenum (82) surrounding the storage vessel (68) to ambient; and
purging stored hydrogen fuel from an internal storage cavity (74) of the storage vessel (68) to ambient when a parameter of the leaked hydrogen fuel is above a threshold.

15. The method of claim 14, further comprising directing air into the containment plenum (82) to flush the leaked hydrogen fuel out of the containment plenum (82), optionally wherein the air is directed into the containment plenum (82) using an electric fan (102).
